# EUROPEAN PATENT APPLICATION

(11) **EP 4 365 529 A1**
(43) Date of publication of application: **08.05.2024**
(21) Application number: 23195602.0
(22) Date of filing: 06.09.2023
(51) Int. Cl.: F27B 9/20, F27B 9/24, F27B 9/06, F27B 9/30, F27D 3/12, F27B 9/36

(54) **HEAT TREATMENT APPARATUS FOR MANUFACTURING ACTIVE MATERIAL FOR SECONDARY BATTERY**

(30) Priority: 03.11.2022 KR 20220145526
(71) Applicant: Hanwha Corporation, Seoul 04541 (KR)
(72) Inventor: Lee, Sung Mun, Seoul (KR); Kang, Shin Pil, Seoul (KR); Choi, Young Jin, Seoul (KR)
(74) Representative: Gulde & Partner

(57) **Abstract**

Proposed is a heat treatment apparatus including a furnace body in which a material is transferred and heat treated, a sagger configured to receive and transport the material into the furnace body, a roller configured to transfer the sagger, and a heater disposed at a position apart from the sagger, wherein the sagger seated on the roller comprises a plurality of sagggers, the heater comprises an upper heater disposed above the sagger, and a lower heater disposed under the sagger, based on a third direction which is a height direction of the furnace body, the lower heater is disposed closer to the roller than to a bottom surface of the furnace body.

## Description

### BACKGROUND OF THE INVENTION

### Field of the Invention

The present disclosure relates generally to a heat treatment apparatus for manufacturing an active material for a secondary battery in which temperature deviation characteristics are improved. More particularly, the present disclosure relates to a heat treatment apparatus for manufacturing an active material for a secondary battery which reduces temperature deviation between a plurality of saggers through the arrangement of a roller for transporting the saggers which receive and transport materials to be heat treated.

### Description of the Related Art

In general, a heat treatment furnace is a device used for the purpose of improving physical properties by applying high-temperature heat to metal or non-metal materials, and includes a combustion furnace that generates heat by burning coal, oil, and gas according to a heat source, an electric furnace that uses an electric heater, and a radiant tube furnace that uses radiant heat transfer. The heat treatment furnace is divided into a continuous roller hearth type heat treatment furnace and a batch type heat treatment furnace according to the flow of a material, and is used in various fields such as sintering of ceramic, sintering of metal and ceramic, sintering of indium tin oxide (ITO) powder, firing of enamel, and firing of secondary battery materials, etc.

Among them, the continuous roller hearth type heat treatment furnace includes a preheating zone for preheating a material at room temperature to around 100°C, a maintenance zone for maintaining the material preheated in the preheating zone at a high temperature, and a cooling zone for cooling the heat treated material, and atmospheric gas is mainly used as gas supplied to the preheating zone and the maintenance zone.

As the conventional continuous roller hearth type heat treatment furnace, a tunnel kiln is disclosed in Korean Patent No. 10-0009592. The Korean Patent discloses the tunnel kiln in which firing of materials is performed by providing a space as a combustion chamber between the materials to be fired loaded in a bogie for firing, wherein a heater and a circulation fan outside the furnace are installed between a circulating gas inlet on the low-temperature side of a preheating zone and a gas discharge outlet on the high-temperature side thereof, a duct for communicating the heater and circulation fan with the inside of the furnace of the preheating zone is installed, the circulation fan is installed outside the furnace of the cooling zone, and the circulation fan and the inside of the furnace of the cooling zone are communicated with each other by a base material of the duct.

### SUMMARY OF THE INVENTION

The present invention is set out in the appended set of claims, wherein the drawings and respective description relate to advantageous embodiments thereof. Accordingly, the present invention is directed to the object to provide a heat treatment apparatus for manufacturing an active material for a secondary battery in which an internal atmosphere in which materials are heat-treated can be maintained to be uniform through the size of a furnace and the arrangement relationship of a roller for transporting the materials.

In order to achieve the above objective, according to the present invention, there is provided a heat treatment apparatus including: a furnace body in which a material is transferred and heat treated; a sagger disposed inside the furnace body and configured to receive and transport the material; a roller configured to transport the sagger; and a heater disposed at a position apart from the sagger, wherein the sagger seated on the roller comprises a plurality of sagggers, the heater comprises an upper heater disposed above the sagger, and a lower heater disposed under the sagger, based on a third direction which is a height direction of the furnace body, the lower heater is disposed closer to the roller than to a bottom surface of the furnace body.

When the saggers are disposed in n rows in a first direction which is orthogonal to a transport direction of each of the saggers and is a width direction of the furnace body, some saggers of the saggers disposed in the n rows may be in contact with each other to constitute sagger unit bodies.

The number of the sagger unit bodies may be half the number of the n rows, and each of the sagger unit bodies may include one pair of first saggers and second saggers along the first direction, wherein facing surfaces of the first saggers and the second saggers may be in contact with each other, and an outer surface of the first saggers and an outer surface of the second saggers may be exposed and respectively constitute opposite surfaces of the sagger unit body.

Side supply pipes may be provided on a side surface of the furnace body.

A center of each of the side supply pipes may be disposed at a side upper than or on the same plane as an uppermost surface of each of the saggers based on the third direction which is the height direction of the furnace body, and the side supply pipe may be disposed at a position apart from the roller.

The number of the side supply pipes may be equal to or less than the number of layers of the saggers provided in the plurality of layers in the third direction which is the height direction of the furnace body.

According to the heat treatment apparatus of the present disclosure, the discharge pipes for discharging gas inside the furnace are formed in an upstream section of a maintenance zone and a heating zone, thereby facilitating gas discharge in the furnace.

According to the present disclosure, the lower discharge pipe is formed on the bottom of the furnace, thereby efficiently discharging carbon dioxide generated during the manufacturing process of a cathode active material for a secondary battery.

According to the present disclosure, the lower discharge pipe is formed at the center of the bottom of the furnace and a plurality of upper discharge pipes are formed on the ceiling of the furnace, and thus the atmosphere inside the furnace can be maintained uniformly.

In addition, the furnace can be expanded to have a wide internal space within the range of maintaining a uniform atmosphere inside the furnace due to the plurality of upper discharge pipes, thereby enabling a large number of materials to be heat-treated at once.

In order to simultaneously heat-treat a plurality of materials, the sagger may be used as a means of stacking each of the materials. In this case, an opening part is formed in the side surface of the sagger, and thus atmospheric gases such as air or oxygen supplied from the outside may efficiently contact the materials and cathode active materials for a secondary battery may be efficiently generated on the materials.

In the heat treatment apparatus of the present disclosure, when a distance between inner walls of a width direction (a first direction) which is an x-axis direction of the furnace is defined as a first length, the distance of the saggers in the first direction of the furnace is defined as a second length, a distance between each of the opposite ends of the saggers and each of the inner walls of the furnace is defined as a third length, a distance between the sagger unit bodies formed in one pair of rows and a plurality of layers among saggers disposed in a plurality of rows and layers is defined as a fourth length, a height between the inner bottom surface of the furnace body and the uppermost surface of a ceiling surface of the furnace body along the third direction which is the height direction of the furnace body is defined as a first height, height between the bottom surface inside the furnace body and the center of the roller is defined as a second height, height between the center of the roller and the center of the upper heater is defined as a third height, height between the center of the lower heater and the center of the roller is defined as a fourth height, height between the bottom surface inside the furnace body and the center of the upper heater is defined as a fifth height, height between the bottom surface inside the furnace body and the center of the lower heater is defined as a sixth height, height between the center of the roller and the uppermost surface of the ceiling surface inside the furnace body is defined as a seventh height, and height between the center of the roller and the top surface of the saggers stacked in a plurality of layers along the third direction is defined as an eighth height, a ratio relationship between each height is preset, and by satisfying these preset conditions, a uniform atmosphere in which temperature deviation, gas distribution deviation, and gas pressure deviation, etc. are maintained to be constant is formed, thereby improving the yield of materials.

### BRIEF DESCRIPTION OF THE DRAWINGS

The above and other objectives, features, and other advantages of the present disclosure will be more clearly understood from the following detailed description when taken in conjunction with the accompanying drawings, in which:
FIG. 1 is a schematic diagram of the entire configuration of the present disclosure;
FIG. 2 is a cross-sectional view of a heat treatment apparatus of the present disclosure;
FIG. 3 is a cross-sectional view taken from a different side from FIG. 2 in the heat treatment apparatus of the present disclosure; and
FIG. 4 is a schematic plan view illustrating the arrangement state of a plurality of furnace blocks of the heat treatment apparatus of the present disclosure.

### DETAILED DESCRIPTION OF THE INVENTION

Hereinafter, embodiments of the present disclosure will be described in detail with reference to the accompanying drawings. However, the technical idea of the present disclosure is not limited to some of the described embodiments, but may be implemented in various forms. At least one component in the embodiments may be selectively combined and/or substituted within the scope of the technical idea of the present disclosure.

In addition, terms in the embodiments of the present disclosure may be interpreted in terms that can be generally understood by those skilled in the art, unless specifically defined, and generally used terms are interpreted in consideration of the contextual meaning of the related technology.

In addition, the terms of the embodiments of the present disclosure are for description of the embodiments and do not limit the present disclosure, and singular forms may be interpreted as including plural forms unless the context clearly indicates otherwise.

In addition, in the components of the embodiments of the present disclosure, terms such as first, second, and third, or A, B, and C, etc. may be used, and these terms are only for distinguishing one component from other components and does not limit order or sequence thereof.

In addition, in the embodiment of the present disclosure, when one component is described as "connected", "bonded", and "coupled", etc. to another component, it may mean that the one component is directly connected, bonded, or coupled to the other component, and two components are indirectly connected, bonded, or coupled to each other by another component therebetween.

In addition, in the embodiment of the present disclosure, the placement, formation, and positioning of one component on, beneath, above, or under another component may mean that the one component is directly or indirectly placed, formed, or positioned on, above, or under the other component. Expressions such as up or down, and an upper or lower side may mean not only an upward direction but also a downward direction with respect to one component.

A continuous roller hearth type heat treatment apparatus according to the present disclosure includes a preheating zone in which a material is transferred by using a roller and is preheated, a maintenance zone in which the material preheated in the preheating zone is heat treated at high temperature, and a cooling zone in which the high temperature material is cooled. A heating zone is formed between the preheating zone and the maintenance zone to heat a material to a high temperature. In the preheating zone and the heating zone, room temperature gas and preheated gas are injected into a furnace (a heat treatment furnace), and a supply pipe is formed on the bottom surface of the furnace and a discharge pipe is formed on the ceiling of the furnace in a direction in which high temperature gas moves so that a material to be treated reacts efficiently to atmospheric gas.

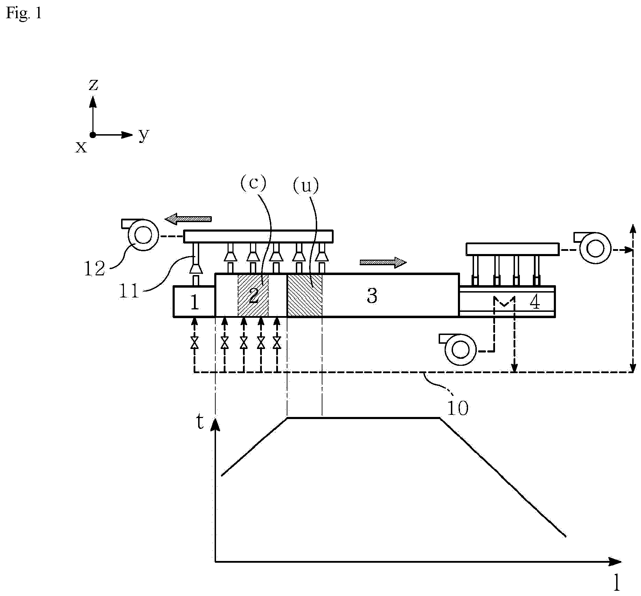

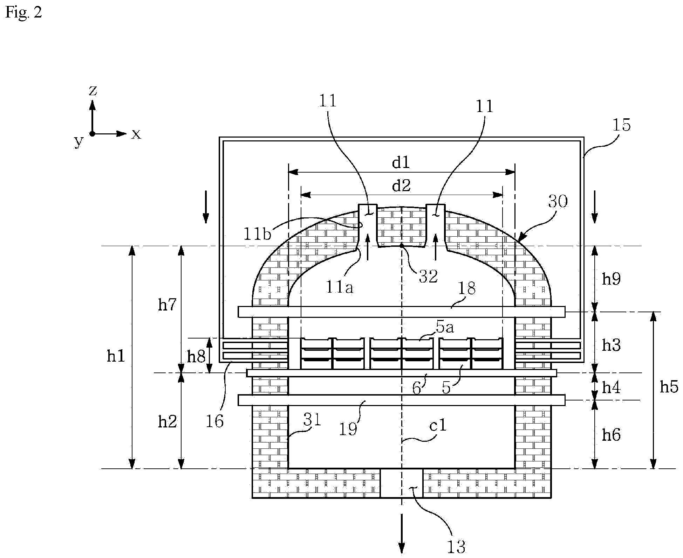

FIG. 1 is a schematic diagram of the entire configuration of the present disclosure, and FIG. 2 is a cross-sectional view of the heat treatment apparatus of the present disclosure.

Referring to FIGS. 1 and 2, the present disclosure relates to the heat treatment apparatus including: the preheating zone 1 configured to transfer and preheat a material, the maintenance zone 3 configured to perform high temperature heat treatment on the material preheated in the preheating zone 1, and the cooling zone 4 configured to cool the high temperature material. The heating zone 2 is formed between the preheating zone 1 and the maintenance zone 3 to heat a material to a high temperature. In the preheating zone 1 and the heating zone 2, high temperature gas may be injected into a furnace constituting the heat treatment apparatus.

The supply pipe 10 through which high temperature gas is supplied is formed on the bottom surface of the furnace, and an upper discharge pipe 11 is formed on the ceiling of the furnace so that power loss due to gas circulation is minimized.

The roller 6 for transporting a material may be provided inside the furnace, the conveying speed of the material may be easily adjusted, and uniform heat treatment on the material may be performed regardless of the front, rear, upper, or lower side of the material.

A material is usually heated to around 100°C in the preheating zone 1. At this time, the material is preheated by using a high-temperature gas around 120°C.

In the graph of FIG. 1, a horizontal axis may represent length l, and a vertical axis may represent a temperature t.

In the heating zone 2, the temperature of a material is raised to 950 to 1250°C by an electric heater, and next, in the maintenance zone 3, heat treatment is performed by maintaining the temperature of the material at a temperature similar to the temperature of the material in the heating zone 2, and finally, in the cooling zone 4, the material may be cooled by using low-temperature gas.

High-temperature gas after being used for cooling a material in the cooling zone 4 is injected into the preheating zone 1 and the heating zone 2, and a separate heating device may be provided to increase the temperature of the gas when necessary.

The supply pipe 10 through which gas is injected into the preheating zone 1 and the heating zone 2 is formed on the bottom surface of the furnace, and the upper discharge pipe 11 is formed on the ceiling of the furnace. Since high-temperature air tends to rise upward, gas introduced through the supply pipe 10 exchanges heat with a material and can be naturally discharged through the upper discharge pipe 11.

Gas discharged to the outside through the upper discharge pipe 11 can be easily discharged by a blower 12. In a preferred embodiment the heat treatment apparatus comprises more than one upper discharge pipe 11, more preferably at least two discharge pipes 11.

In the case of the heat treatment apparatus, when gas discharge does not occur quickly, the heat treatment effect of a material by the heat treatment apparatus may be reduced, and thus the heat treatment apparatus is configured to have two upper discharge pipes 11 so that gas can be discharged relatively rapidly.

A temperature detection sensor that can measure the temperature of discharged gas may be attached on one side of the upper discharge pipes 11, and the temperature of gas discharged from the two upper discharge pipes 11 is averaged. It is preferable that when the temperature of the gas is relatively low, the flow rate of gas supplied from the supply pipe 10 and discharged from the upper discharge pipes 11 is reduced, and when the temperature of the gas is relatively high, the flow rate of the gas to be supplied and exhausted is increased.

When temperature deviation, gas distribution deviation, and gas pressure deviation, etc. are reduced, the heat treatment quality of materials becomes homogeneous. In addition, when the temperature deviation and the gas pressure deviation, etc. are reduced, the inner space of the furnace in which materials are received may be expanded. When the expanded inner space is provided, it is possible to increase the number of the materials injected into the furnace, which is advantageous for mass production.

In a lithium secondary battery, a cathode active material is dependent on a material preparation method prior to synthesis and a synthesis process. For mass production, a method of producing a cathode active material by a solid phase reaction by using a sintering furnace is being adopted.

The sintering furnace process of using the heat treatment apparatus is a method in which a precursor, which is first made into powder and mixed well, is put into a porous ceramic container (the sagger) and synthesized in the sintering furnace of a high-temperature atmosphere. Since the particle size, distribution, and structure of obtained cathode active materials vary depending on temperature, atmosphere gas, and synthesis time in the sintering furnace, it is very important to control temperature distribution and flow condition of reactant gas inside the sintering furnace.

Cathode active materials such as LiCoO2 (lithium cobalt oxide) are easy to be synthesized, have gradual change in potential, and have excellent conductivity, and thus are mainly used in secondary batteries.

Referring to FIGS. 1 and 2, in order to reduce temperature distribution deviation inside the furnace, the upper discharge pipes 11, and lower discharge pipes 13 may be formed at preset positions.

For example, the upper and lower discharge pipes 11 and 13 may be formed in the entire area of the heating zone 2. Specifically, the upper and lower discharge pipes 11 and 13 are spaced apart at a predetermined interval from each other and may be disposed in an inlet or outlet area of the heating zone 2. In addition, the upper discharge pipe 11 and the lower discharge pipe 13 may be further formed in the maintenance zone 3. For example, each of the upper and lower discharge pipes 11 and 13 may be formed in a part of the maintenance zone 3. Specifically, the upper and lower discharge pipes 11 and 13 may be further formed in the upstream section u of the maintenance zone 3. In a preferred embodiment, the upper and lower discharge pipes 11 and 13 are spaced apart at a predetermined interval from each other and may be disposed in an inlet or outlet area of the heating zone 2 and may be further formed in the upstream section u of the maintenance zone 3. Accordingly, in each of the heating zone 2 and the maintenance zone 3, a temperature distribution deviation for a process can be minimized, impurity gas can be effectively discharged, and a phenomenon in which the partial pressure of oxygen is lowered can be minimized.

Unlike this, the discharge pipes 11 and 13, which discharge gas in a furnace body 30 to improve the distribution deviation of the gas supplied to the inside of the furnace, may be formed in the upstream section u corresponding to a partial section of a side close to the heating zone 2 in the maintenance zone 3 and in the heating zone 2.

The discharge pipes 1 1, 13 may be composed of the upper discharge pipe 11 including a plurality of upper discharge pipes 11, preferably at least two upper discharge pipes 11, provided on the ceiling of the furnace body 30, and the lower discharge pipe 13 formed on the bottom surface of the furnace body 30.

The lower discharge pipe 13 may be formed across the heating zone 2 and the upstream section u. The upper discharge pipe 11 may be formed only in a middle section (c) of the heating zone 2 among sections between the heating zone 2 and the upstream section u. The upper discharge pipe 11 may be excluded from each of the inlet part and outlet part of the heating zone 2.

In the middle section (c) of the heating zone 2, various exhaust gases lighter than air may be generated. The corresponding impurity gases may be discharged to the outside through the upper discharge pipe 11 formed in the section (c).

When the upper discharge pipes 11 are installed across the heating zone 2 and the upstream section (u), oxygen may be excessively discharged through the upper discharge pipes 11 and thus the partial pressure of oxygen may be lowered. According to an embodiment of the present disclosure, the upper discharge pipe 11 is formed only in the section (c), and thus the phenomenon of lowering the partial pressure of oxygen may be minimized. According to a preferred embodiment, at least two upper discharge pipes 11 are formed only in the section (c).

Due to the upper discharge pipe 11 formed only in the section (c), the decrease of the partial pressure of oxygen is prevented. Since the partial pressure of carbon dioxide is sufficiently lowered by the lower discharge pipes 13 formed throughout the heating zone 2 and the upstream section (u), the particle size of LiCoO2 is reduced and the synthesis reaction of LiCoO2 may proceed efficiently.

Based on a third direction (a z-axis direction), the upper discharge pipe 11 and the lower discharge pipe 13 may not overlap or partially overlap each other. When the upper discharge pipe 11 and the lower discharge pipe 13 partially overlap each other, the upper discharge pipe 11 may overlap the lower discharge pipe 13 within a range of 15% or less thereof (based on the second direction (a y-axis direction)). According to an embodiment, when an upper discharge pipe 11 and a lower discharge pipe 13 are respectively formed on an upper part and the bottom surface of the furnace body 30, the upper discharge pipe 11 and the lower discharge pipe 13 are disposed so as not to overlap each other based on the third direction.

In addition, based on a first direction (an x-axis direction), the upper discharge pipe 11 and the lower discharge pipe 13 may have different widths. For example, the upper discharge pipe 11 may have a smaller width than the width of the lower discharge pipe 13.

According to another embodiment, an upper discharge pipe 11 and a lower discharge pipe 13 are respectively formed on an upper part and the bottom surface of the furnace body 30, an inner surface of the upper discharge pipe 11 comprises a first surface 11a having a width changing outward, and a second surface 11b having a constant width, and based on the third direction, a height of the first surface 11a is smaller than a height of the second surface 11b.

In addition, the upper discharge pipe 11 may include an inclined first surface 11a communicating with the inside of the furnace body 30, and a second surface 11b having the constant width of the first direction (the x-axis direction) toward the upper outside of the furnace body 30 along the third direction (the z-axis direction) from the first surface 11a. In addition, based on a height direction, which is the third direction, the height of the first surface 11a may be lower than the height of the second surface 11b. More specifically, the height of the first surface 11a may be preset to be 50% or less of the height of the second surface 11b.

According to a preferred embodiment, the upper discharge pipe 11 may include an inclined first surface 11a communicating with the inside of the furnace body 30, and a second surface 11b having the constant width of the first direction (the x-axis direction) toward the upper outside of the furnace body 30 along the third direction (the z-axis direction) from the first surface 11a. In addition, based on the height direction, which is the third direction, the height of the first surface 11a may be lower than the height of the second surface 11b. More specifically, the height of the first surface 11a may be preset to be 50% or less of the height of the second surface 11b.

The upper discharge pipe 11, which has the inclined first surface 11a, includes a plurality of upper discharge pipes 11, preferably at least two upper discharge pipes 11, in the third direction, and thus when atmospheric gas, which is a fluid inside the furnace body 30, is discharged, the rapid change of the flow rate of the atmospheric gas can be controlled. Accordingly, the atmospheric gas supplied into the furnace body 30 can flow stably, and accordingly, a material in the sagger 5 introduced into the furnace body 30 can be better heat treated. In addition, gas distribution inside the furnace body 30 can be uniform, and temperature deviation inside the furnace body 30 can be reduced. The inner space of the furnace body 30 through which a material is moved can be expanded through the improvement of the uniformity of gas distribution and the reduction of temperature deviation. Accordingly, a larger number of the saggers can be transported by using the expanded space inside the furnace.

Lithium carbonate (Li₂CO₃), cobalt oxide (Co₃O₄), and oxygen (O₂) may exist in the heating zone 2. For example, lithium carbonate, cobalt oxide, and oxygen in gaseous states may be injected into the heating zone 2. Alternatively, lithium carbonate and cobalt oxide may be applied to a material and put into the heating zone 2 together with the material. Lithium carbonate and cobalt oxide may be materials.

The lower discharge pipe 13 can lower the partial pressure of a by-product of chemical reaction between lithium carbonate, cobalt oxide, and oxygen, in particular, the partial pressure of carbon dioxide (CO₂).

The lower discharge pipe 13 may be formed at a position lower than the position of the material located in the furnace body 30.

In addition, the lower discharge pipe 13 may be formed at a position lower than a support means for supporting a material inside the furnace body 30. The support means may include the roller 6 for conveying a material. According to one embodiment, the lower discharge pipe 13 may be formed at a position lower than the roller 6 for conveying a material.

Carbon dioxide heavier than air descends inside the furnace body 30 and may be discharged to the outside through the lower discharge pipe 13. Due to the lower discharge pipe 13 through which carbon dioxide is discharged, the partial pressure of carbon dioxide in the furnace body 30 may be lowered.

The lower discharge pipe 13 may be formed at the center of the bottom of the furnace so that the partial pressure of carbon dioxide in the furnace body 30 is uniform. Specifically, when a material is conveyed along the second direction, which is the y-axis direction, the lower discharge pipe 13 may be formed at the center of the furnace body 30 in the third direction, which is the z-axis direction perpendicular to the first direction. According to a preferred embodiment, the lower discharge pipe 13 may be formed at the center of the furnace body 30 in the third direction, which is the z-axis direction perpendicular to the first direction.

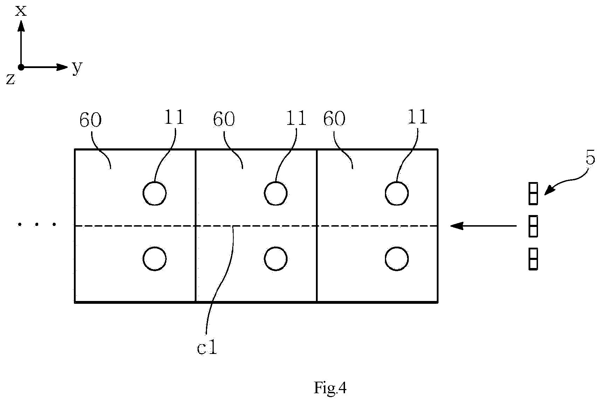

Referring to FIG. 2 or 4, to maintain the uniformity of gas distribution, the upper discharge pipe 11 may include a plurality of upper discharge pipes 11, preferably at least two upper discharge pipes 11, formed along the first direction, which is the x-axis direction, perpendicular to the second direction, which is the moving direction of a material and is the y-axis direction. In a preferred embodiment, the plurality of upper discharge pipes 11 may be formed at symmetrical positions based on a center line c1 of the furnace body 30 along the first direction.

In this case, the gas distribution inside the furnace may be uniform, and the temperature deviation inside the furnace may be reduced. Through the improvement of the uniformity of gas distribution and the reduction of the temperature deviation, it is possible to expand the inner space of the furnace through which a material moves. Accordingly, a larger number of saggers can be transported by using the expanded inner space of the furnace.

The saggers 5 may be introduced into the furnace body 30 while materials are received in the saggers 5. The saggers may be formed in a special structure so that the chemical reaction of each material is not limited due to the saggers stacked in multiple layers. In one embodiment, the number of layers is 1 to 10, preferably 2 to 6, more preferably 3.

Reactive gases such as oxygen and air injected from the supply pipe 10 may contact a material through the opening part formed in each of the saggers and can react chemically with the material.

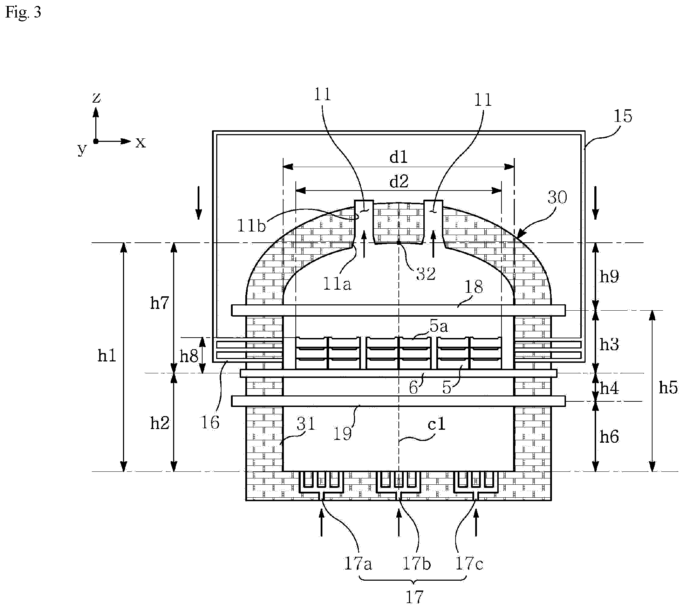

Referring to FIG. 3, in the heating zone 2, a lower supply pipe 17 for injecting high-temperature gas may be formed on the bottom surface of the furnace body 30.

The lower supply pipe 17 may include a plurality of lower supply pipes disposed at intervals in a direction (a width direction of the furnace body 30) orthogonal to the moving direction of the sagger 5 introduced into the furnace body 30 and transported.

For example, the lower supply pipe 17 may include a plurality of lower supply pipes disposed at intervals along the width direction which is the x-axis direction (the first direction) of the furnace body 30, that is, may include a first lower supply pipe 17a, a second lower supply pipe 17b, and a third lower supply pipe 17c.

The first lower supply pipe 17a, the second lower supply pipe 17b, and the third lower supply pipe 17c may constitute a unit supply pipe composed of a plurality of branch supply pipes, and gas supplied into the furnace body 30 through the second lower supply pipe 17b disposed in the middle among the plurality of lower supply pipes may directly move toward the ceiling of the furnace body 30 on which the upper discharge pipes 11 are formed.

In addition, gas supplied through the first lower supply pipe 17a and the third lower supply pipe 17c disposed respectively on the opposite sides of the second lower supply pipe 17b may move up on the inner walls 31 of the furnace and may move to the upper discharge pipes 11.

Referring to FIGS. 2 to 4, the entirety of the furnace body 30 may be formed by connecting the plurality of furnace blocks 60, which form areas, to each other. Each of the furnace blocks 60 may include the plurality of upper discharge pipes 11 through and the lower discharge pipe 13 which gas is discharged, a side supply pipe 16 and the lower supply pipe 17 through which high temperature gas is supplied, and an upper heater 18 and a lower heater 19 as heaters which heat materials.

The plurality of upper discharge pipes 11 may be formed on the ceiling surface of the furnace body 30, and the lower discharge pipe 13 and the lower supply pipe 17 may be formed on the bottom surface of the furnace body 30.

In addition, the side supply pipe 16 may include a plurality of side supply pipes formed on the opposite side surfaces of the furnace body 30. The side supply pipes 16 may be disposed at preset positions on the side surfaces. For example, based on the first direction (the x-axis direction, the side supply pipes 16 may be disposed in an area corresponding to the saggers 5, and may be disposed in an area not corresponding to the roller 6.

In an embodiment, the side supply pipes 16 are provided on a side surface of the furnace body 30. A center of each of the side supply pipes 16 is disposed at a side upper than or on the same plane as an uppermost surface 32 of each of the saggers 5 based on the third direction. The side supply pipe 16 is disposed at a position apart from the roller 6.

In addition, the side supply pipe 16 may include a plurality of side supply pipes provided in the third direction in proportion to the saggers 5 stacked in a plurality of layers along the third direction (the z-axis direction). In an embodiment, the number of side supply pipes 16 is equal to or less than the number of layers of the saggers 5 provided in the plurality of layers in the third direction. That is, for example, in proportion to a case in which the saggers 5 stacked in three layers are formed, three side supply pipes 16 may be disposed to be spaced apart from each other.

The upper heater 18 may be disposed at a position higher than the sagger 5 transported by the roller 6 so that the upper heater 18 is spaced apart from the sagger 5, and the lower heater 19 may be disposed at a side under the roller 6 so that the lower heater 19 is spaced apart from the roller 6.

The plurality of side supply pipes 16 may be connected to a side supply connection pipe 15 so that high temperature gas can be supplied.

Here, the present disclosure is characterized in that an arrangement relationship between the saggers 5 installed inside the furnace body 30 and the roller 6 transporting the saggers 5 is improved.

The saggers 5 may be arranged in a plurality of rows along the first direction, which is the x-axis direction (the width direction of the furnace), and may be transported by being stacked in multiple layers along the third direction (the height direction of the furnace), which is the z-axis direction. That is, the first direction may be a direction in which the saggers are arranged in a row, and the third direction may be a direction in which the saggers are arranged in a layer.

As the transport distance of the saggers 5 increases, the good alignment of the saggers 5 may not be maintained when the saggers 5 are arranged in a plurality of rows and layers. In addition, in this case, the characteristic of temperature uniformity inside the furnace is deteriorated, and thus temperature deviation may occur according to each area of the first to the third direction. In this case, heat energy provided to each of the plurality of saggers 5 may be different, and because of this, the physical properties of materials provided inside the saggers 5 may be different from each other.

According to a preferred embodiment, the saggers 5 are disposed in n rows in a first direction which is a width direction of the furnace body 30 while orthogonal to a transport direction of each of the saggers 5 and n is an integer of 1 to 20, preferably 2 to 10, more preferably 6. In addition, some saggers of the saggers 5 disposed in the n rows are in contact with each other to constitute sagger unit bodies. The number of the sagger unit bodies is half the number of the n rows. Each of the sagger unit bodies comprises one pair of first saggers and second saggers along the first direction and facing surfaces of the first saggers and the second saggers are in contact with each other and an outer surface of the first saggers and an outer surface of the second saggers are exposed and respectively constitute opposite surfaces of the sagger unit body.

Accordingly, according to the present disclosure, through the size of the furnace body 30, and an arrangement relationship between the roller 6 and the saggers 5, the alignment of the saggers 5 is not easily disturbed to provide uniform heat thereto even if the saggers 5 are arranged in a plurality of layers and rows and transported, thereby improving temperature distribution inside the furnace.

For example, the roller 6 may be disposed closer to the bottom surface of the furnace body 30 than to the uppermost surface 32 of the furnace body 30. In addition, the roller 6 may be disposed closer to the inner center of the furnace body 30 than to the bottom surface of the furnace body 30. Here, the inner center of the furnace body 30 may mean a 1/2 point of a first height h1 to be described later based on the third direction (the z-axis direction).

The uppermost surface 32 inside the furnace body 30 may be formed as a flat or curved surface. For example, the uppermost surface 32 is provided as a curved surface according to the present disclosure, the exhaust properties of a fluid can be improved. That is, it is possible to prevent the occurrence of turbulence during the flow of a fluid and secure the residence time of a fluid for heat treatment.

In addition, based on the third direction (the z-axis direction), the roller 6 may be spaced apart from the upper heater 18 and the lower heater 19 at different intervals. For example, the roller 6 may be disposed closer to the lower heater 19 rather than the upper heater 18 in consideration of the flow characteristics of supplied and discharged fluids and the characteristics of uniformity of thermal energy provided to the plurality of saggers 5.

In detail with reference to FIG. 2, a distance between the inner walls 31 in the first direction (the width direction) which is the x-axis direction of the furnace body 30 may be defined as a first length d1, and the distance of the saggers 5 in the first direction of the furnace body 30 may be defined as a second length d2.

In addition, height between the bottom surface inside the furnace body 30 and the uppermost surface 32 of the ceiling surface along the third direction (the height direction) which is the z-axis direction is defined as the first height h1, height between the bottom surface inside the furnace body 30 and the center of the roller 6 is defined as a second height h2, height between the center of the roller 6 and the center of the upper heater 18 is defined as a third height h3, height between the center of the lower heater 19 and the center of the roller 6 is defined as a fourth height h4, height between the bottom surface inside the furnace body 30 and the center of the upper heater 18 is defined as a fifth height h5, height between the bottom surface inside the furnace body 30 and the center of the lower heater 19 is defined as a sixth height h6, height between the center of the roller 6 and the uppermost surface 32 of the ceiling surface inside the furnace body 30 is defined as a seventh height h7, height between the center of the roller 6 and the top surface of saggers 5 stacked in a plurality of layers along the third direction which is the z-axis direction is defined as an eighth height h8, the following ratio relationship may be preset.

The ratio of the second length d2 to the first length d1 may be preset to be 80% to 95%, more preferably 85% to 95%, and even more preferably 90% to 95%. That is, d2/d1 may be preset to be 80% to 95%, 85% to 95%, or 90% to 95% (a first reference).

The ratio of the second height h2 to the first height h1 may be preset to be 30% to 50%, more preferably 35% to 50%, and even more preferably 40% to 50%.

That is, h2/h1 may be preset to be 30% to 50%, 35% to 50%, or 40% to 50% (a second reference).

In addition, the ratio of the fourth height h4 to the third height h3 may be preset to be 60% to 90%, more preferably 65% to 85%, and even more preferably 70% to 80%.

That is, h4/h3 may be preset to be 60% to 90%, 65% to 85%, or 70% to 80% (a third reference).

In addition, the ratio of the fifth height h5 to the first height h1 may be preset to be 50% to 80%, more preferably 55% to 75%, and even more preferably 60% to 70%.

That is, h5/h1 may be preset to be 50% to 80%, 55% to 75%, or 60% to 70% (a fourth reference).

In addition, the ratio of the sixth height h6 to the first height h1 may be preset to be 10% to 35%, more preferably 15% to 30%, and even more preferably 20% to 30%.

That is, h6/h1 may be preset to be 10% to 35%, 15% to 30%, or 20% to 30% (a fifth reference).

In addition, the ratio of the third height h3 to the seventh height h7 may be preset to be 25% to 50%, more preferably 30% to 50%, and even more preferably 35% to 45%.

That is, h3/h7 may be preset to be 25% to 50%, 30% to 50%, or 35% to 45% (a sixth reference).

In addition, the ratio of the eighth height h8 to the seventh height h7 may be preset to be 20% to 40%, more preferably 25% to 35%, and even more preferably 28% to 35%.

That is, h8/h7 may be preset to be 20% to 40%, 25% to 35%, or 28% to 35% (a seventh reference).

When at least one of the first reference to the seventh reference is satisfied, in particular, when at least one of the second reference to the fifth reference is satisfied, temperature deviation between saggers 5 disposed inside the furnace body 30 may be reduced to provide uniform heat thereto, and the saggers 5 may be arranged in various rows and layers.

When height between the roller 6 and the upper heater 18, which is the third height h3, is small so that the roller 6 and the upper heater 18 are close to each other, the size and/or number of layers of the saggers 5 during the stacking of the saggers 5 may be limited.

In addition, when height between the center of the upper heater 18 and the uppermost surface 32 of the ceiling surface inside the furnace body 30 is defined as a ninth height h9, the ninth height h9 may be larger than the third height h3. That is, in the third direction which is the z-axis direction and the height direction, the upper heater 18 may be disposed closer to the roller 6 than to the uppermost surface 32 of the ceiling surface inside the furnace body 30.

For example, as illustrated in FIGS. 2 and 3, in a state in which the saggers 5 are stacked in six rows and three layers, when the second height h2, which is height between the bottom surface inside the furnace body 30 and the center of the roller 6, increases, temperature deviation between saggers 5 inside each furnace block 60 in the heat treatment apparatus having a plurality of furnace blocks 60 may be reduced to about 5°C or less.

In addition, according to the present disclosure, when an interval between sagger unit bodies 5a having saggers 5 disposed in at least one pair of rows and a plurality of layers among the saggers 5 disposed in a plurality of rows and layers is defined as a first interval (g1), and an interval between each of the opposite ends of all of the disposed saggers 5 and each of the inner walls 31 of the furnace body 30 is defined as a second interval (g2), the first interval (g1) may be preset to be smaller than the second interval (g2).

The operation and effect of the present disclosure will be described in more detail through an experiment example and a comparison example below.

### Experiment example

Six 65m heat treatment apparatuses (first to sixth apparatuses) in which the preheating zone 1, the heating zone 2, the maintenance zone 3, and the cooling zone 4 are sequentially formed are manufactured. Each of the heat treatment apparatuses includes a sintering furnace having the inner width (the x-axis direction in FIGS. 2 and 3) of the furnace being about 2200mm, and height (the z-axis direction in FIGS. 2 and 3) between the bottom surface of the furnace and the uppermost surface 32 of the ceiling surface being about 1360mm, wherein a roller 6 which can support and transport saggers 5 is disposed inside the sintering furnace. In this case, the roller 6 is disposed at height 578mm away from the bottom surface of the furnace. That is, in the heat treatment apparatus according to the experiment example, the roller 6 is disposed at a position at which the ratio of the second height h2 to the first height h1 described above satisfies about 42%. Next, the saggers are disposed in six rows on the roller 6 and are transported in a preset direction (the y-axis direction of FIGS. 2 and 3) so that the maximum temperature of each of the saggers disposed in each of the rows is measured.

### Comparison example

The roller disposed inside the sintering furnace was disposed at height 310mm away from the bottom surface of the furnace. That is, in the heat treatment apparatus according to the comparison example, the roller is disposed at a position at which the ratio of the second height h2 to the first height h1 described above satisfies about 22%. The heat treatment apparatus is formed in the same manner as in the experiment example except for the position of the roller. Next, saggers are disposed in six rows on the roller and are transported in a preset direction (the y-axis direction of FIGS. 2 and 3) so that the maximum temperature of each of the saggers disposed in each of the rows is measured.

**[Table 1]**

| | First apparatus | Second apparatus | Third apparatus | Fourth apparatus | Fifth apparatus | Sixth apparatus |
|---|---|---|---|---|---|---|
| Experiment example | 5°C | 3°C | 3°C | 3°C | 5°C | 5°C |
| Compariso n example | 7°C | 7°C | 7°C | 8°C | 7°C | 8°C |

Table 1 shows maximum temperature deviations between the saggers disposed in 6 rows in each of the heat treatment apparatuses, the first to sixth apparatuses according to the experiment example and the comparison example. For example, a value of the first apparatus in the experiment example means that maximum temperature deviation between a plurality of saggers disposed in 6 rows is 5°C.

Referring to Table 1, the average value of the temperature deviations of the heat treatment apparatuses according to the experiment example is about 4°C, and in each of the heat treatment apparatuses, temperature deviation between the plurality of saggers is about 5°C or less. On the other hand, the average value of the temperature deviations of the heat treatment apparatuses according to the comparison example is about 7.3°C, and in each of the heat treatment apparatuses, temperature deviation between the plurality of saggers is about 8°C or less.

That is, in the heat treatment apparatus according to the embodiment of the present disclosure, the roller 6 is disposed at a preset position inside the furnace body 30, and thus temperature deviation inside the furnace body 30 can be minimized. Specifically, the ratio of the second height h2 to the first height h1 is 30% to 50%, more preferably, 35% to 50%, even more preferably, 40% to 50%, and thus temperature deviation between the saggers disposed in a plurality of rows can be minimized, and because of this, materials disposed inside the plurality of saggers, for example, active materials can be heat treated with excellent uniformity.

Features, structures, and effects, etc. described in the embodiments above are included in at least one embodiment of the present disclosure, and are not necessarily limited to only one embodiment. In addition, each embodiment having the features, structures, and effects, etc. of may be combined or modified with respect to other embodiments by those skilled in knowledge in the field to which the embodiments belong. Accordingly, contents related to the combination and modification should be construed as being included in the scope of the present disclosure.

In addition, although the above has been described with reference to the embodiment, this is only an example and does not limit the present disclosure, and those having ordinary knowledge in the technical field to which the present disclosure belongs will know that various modifications and applications not exemplified above are possible without departing from the essential characteristics of the present embodiment. For example, each component specifically shown in the embodiment may be modified and implemented. In addition, differences related to these modifications and applications should be construed as being included in the scope of the present disclosure defined in the appended claims.

### List of reference signs

- 1: Preheating zone
- 2: Heating zone
- 3: Maintenance zone
- 4: Cooling zone
- 5: Sagger(s)
- 5a: Interval between sagger unit bodies
- 6: Roller
- 10: Supply pipe
- 11: Upper discharge pipe
- 11a: First surface
- 11b: Second surface
- 12: Blower
- 13: Lower discharge pipe
- 15: Side supply connection pipe
- 16: Side supply pipe
- 17: Lower supply pipe
- 17a: First lower supply pipe
- 17b: Second lower supply pipe
- 17c: Third lower supply pipe
- 18: Upper heater
- 19: Lower heater
- 30: Furnace body
- 31: Inner walls
- 32: Uppermost surface
- 60: Furnace blocks
- c1: Center line
- d1: First length
- d2: Second length
- h1 to h9: First height to ninth height
- u: Upstream section
- c: Middle section
- c1: Center line

## Claims

1. A heat treatment apparatus comprising:
a furnace body (30) in which a material is transferred and heat treated;
a sagger (5) configured to receive and transport the material into the furnace body (30);
a roller (6) configured to transfer the sagger (5); and
a heater (18, 19) disposed at a position apart from the sagger (5),
wherein the sagger (5) seated on the roller (6) comprises a plurality of sagggers (5),
the heater (18, 19) comprises an upper heater (18) disposed above the sagger (5), and a lower heater (19) disposed under the sagger (5),
based on a third direction which is a height direction of the furnace body (30), the lower heater (19) is disposed closer to the roller (6) than to a bottom surface of the furnace body (30).

2. The heat treatment apparatus of claim 1, wherein based on the third direction, the upper heater (18) is disposed closer to the roller (6) than to a highest point of a ceiling surface of the furnace body (30).

3. The heat treatment apparatus of claim 1 or 2, wherein an upper discharge pipe (11) and a lower discharge pipe (13) are respectively formed on an upper part and the bottom surface of the furnace body (30), and
the upper discharge pipe (11) and the lower discharge pipe (13) are disposed so as not to overlap each other based on the third direction.

4. The heat treatment apparatus of any of claims 1 to 3, wherein an upper discharge pipe (11) and a lower discharge pipe (13) are respectively formed on an upper part and the bottom surface of the furnace body (30),
an inner surface of the upper discharge pipe (11) comprises a first surface (11a) having a width changing outward, and a second surface (11b) having a constant width, and
based on the third direction, a height of the first surface (11a) is smaller than a height of the second surface (11b).

5. The heat treatment apparatus of any of claims 1 to 4, wherein when a height between the bottom surface inside the furnace body (30) and an uppermost surface (32) of a ceiling surface inside the furnace body (30) is defined as a first height (h1), and a height between the bottom surface inside the furnace body (30) and a center of the roller (6) is defined as a second height (h2), a ratio of the second height (h2) to the first height (h1) is 30% to 50%.

6. The heat treatment apparatus of any of claims 1 to 5, wherein when a height between a center of the roller (6) and a center of the upper heater (18) is defined as a third height (h3), and a height between a center of the lower heater (19) and the center of the roller (6) is defined as a fourth height (h4), a ratio of the fourth height (h4) to the third height (h3) is 60% to 90%.

7. The heat treatment apparatus of any of claims 1 to 6, wherein when a height between the bottom surface inside the furnace body (30) and an uppermost surface (32) of a ceiling surface of the furnace body (30) is defined as a first height (h1), and a height between the bottom surface inside the furnace body (30) and a center of the upper heater (18) is defined as a fifth height (h5), a ratio of the fifth height (h5) to a first height (h1) is 50% to 80%.

8. The heat treatment apparatus of any of claims 1 to 7, wherein when a height between the bottom surface inside the furnace body (30) and an uppermost surface (32) of a ceiling surface of the furnace body (30) is defined as a first height (h1), and a height between the bottom surface inside the furnace body (30) and a center of the lower heater (19) is defined as a sixth height (h6), a ratio of the sixth height (h6) to a first height (h1)is 10% to 35%.

9. The heat treatment apparatus of any of claims 1 to 8, wherein when a height between a center of the roller (6) and a center of the upper heater (18) is defined as a third height (h3), and a height between the center of the roller (6) and an uppermost surface (32) of a ceiling surface inside the furnace body (30) is defined as a seventh height (h7), a ratio of the third height (h3) to the seventh height (h7) is 25% to 50%.

10. The heat treatment apparatus of any of claims 1 to 9, wherein when a distance between inner walls (31) of the furnace body (30) in a first direction which is a width direction of the furnace body (30) while orthogonal to a transport direction of each of the saggers (5) is defined a first length (d1), and a distance between opposite ends of the plurality of saggers (5) is defined as a second length (d2),
a ratio of the second length (d2) to the first length (d1) is 80% to 95%.

11. The heat treatment apparatus of any of claims 1 to 10, wherein the saggers (5) are disposed in a plurality of rows and layers, and when an interval between sagger unit bodies having saggers (5) disposed in at least one pair of rows and a plurality of layers among the saggers (5) disposed in the plurality of rows and layers is defined as a first interval (g1), and an distance between each of opposite ends of all of the disposed saggers (5) and each of inner walls (31) of the furnace body (30) is defined as a second interval (g1), the first interval (g1) is smaller than the second interval (g2).

12. The heat treatment apparatus of any of claims 1 to 11, wherein when a height between a center of the roller (6) and an uppermost surface (32) of a ceiling surface inside the furnace body (30) is defined as a seventh height (h7), and a height between the center of the roller (6) and a top surface of the saggers (5) stacked in a plurality of layers along the third direction is defined as an eighth height (h8), a ratio of the eighth height (h8) to the seventh height (h7) is 20% to 40%.

13. The heat treatment apparatus of any of claims 1 to 12, wherein when the saggers (5) are disposed in n rows in a first direction which is a width direction of the furnace body (30) while orthogonal to a transport direction of each of the saggers (5), and n is an integer of 1 to 20, preferably 2 to 10, more preferably 6, some saggers (5) of the saggers (5) disposed in the n rows are in contact with each other to constitute sagger unit bodies,
the number of the sagger unit bodies is half the number of the n rows, and
each of the sagger unit bodies comprises one pair of first saggers and second saggers along the first direction,
wherein facing surfaces of the first saggers and the second saggers are in contact with each other, and
an outer surface of the first saggers and an outer surface of the second saggers are exposed and respectively constitute opposite surfaces of the sagger unit body.

14. The heat treatment apparatus of any of claims 1 to 13, wherein side supply pipes (16) are provided on a side surface of the furnace body (30),
wherein a center of each of the side supply pipes (16) is disposed at a side upper than or on the same plane as an uppermost surface (32) of each of the saggers (5) based on the third direction, and
the side supply pipe (16) is disposed at a position apart from the roller (6).

15. The heat treatment apparatus of any of claims 1 to 14, wherein side supply pipes (16) are provided on a side surface of the furnace body (30),
wherein the number of side supply pipes (16) is equal to or less than the number of layers of the saggers (5) provided in the plurality of layers in the third direction.
